# EUROPEAN PATENT APPLICATION

(11) **EP 4 672 068 A1**
(43) Date of publication of application: **31.12.2025**
(21) Application number: 24185295.3
(22) Date of filing: 28.06.2024
(51) Int. Cl.: G06F 21/64, H04L 9/32, H04L 9/00

(54) **VERIFICATION OF TRANSACTIONS OF ENTITIES**

(71) Applicant: Siemens Aktiengesellschaft, 80333 München (DE)
(72) Inventor: Cuellar Jaramillo, Jorge Ricardo, 82065 Baierbrunn (DE); Gasiba, Tiago, 81927 München (DE); Suppan, Santiago Reinhard, 93142 Maxhütte-Haidhof (DE)
(74) Representative: Siemens Patent Attorneys

(57) **Abstract**

The invention relates to a method for verifying a transaction (T, T2) of a first entity (V1), wherein the first entity (V1) comprises a local repository (DB1) in which at least one item with corresponding data items is stored, wherein the transaction (T, T2) to be verified modifies the at least one item and its corresponding data items in the local repository (DB1). The method comprises the following steps: requesting (S1) information with respect to the transaction (T, T2) from the first entity (V1), receiving (S2) the requested information comprising a final value of at least one data item of the at least one item after the transaction (T, T2) and a hash value of an internal value of the corresponding transaction (T, T2) of the first entity (V1), and verifying (S3) the hash value of the internal value of the corresponding transaction (T, T2) of the first entity (V1) and verifying the final value of the at least one data item using an invariant with respect to a second value of the at least one data item of the item of the transaction (T, T2). The invention further relates to a corresponding first entity (V1), a second entity (V2) and a system (1) comprising these entities (V1, V2).

## Description

The present invention relates to a method for verifying a transaction of a first entity. Moreover, the invention relates to a first entity performing a transaction to be verified, to a second entity requesting a verification of the transaction and to a system comprising the first and the second entity. Further, the invention relates to a computer program product comprising a program code for executing such a method.

In different technical fields, for example when tracking CO2 fingerprints, it is necessary to share information between different entities. Each of the entities may have a local repository in which information regarding their respective items are stored, together with corresponding data items, e.g., attributes of the items. When items are exchanged between the entities, the respective local repositories, in particular the items and their corresponding data items, will change with this exchange or transaction between the entities.

For example in the case of tracking CO2 fingerprints, an entity may be required to share information regarding the CO2 consumption of a specific item. However, when this information is shared, the entity requesting the information cannot be sure whether the shared information is correct.

It should be noted that independent of the grammatical term usage, individuals with male, female or other gender identities are included within the term.

Concepts being used until now are blockchains, smart contracts, distributed transaction ledgers, state machine replication, asynchronous byzantine agreement protocols, lattice agreements, etc. However, these existing concepts are too costly in terms of efficiency and implementation and too slow. Furter, they either disclose too much information to other entities (which is not always desired) or, if not, they rely on quite sophisticated cryptography and require trust assumptions on the correctness of their design and implementation and are thus too costly and complex.

Thus, it is one object of the present invention to provide a reliable and simple way of verifying the change or modification of items within a repository caused by transactions between different units while at the same time only the required information is shared.

According to a first aspect, a method for verifying a transaction of a first entity is provided. The first entity comprises a local repository in which at least one item with corresponding data items is stored.

A repository in this context may be any kind of database in which information regarding items and corresponding data items may be stored. A local repository may store at least one item or may store a plurality of items of one entity. Such an item may be for example the name of a product being provided by the entity.

Together with the item, at least one data item may be stored. Data items may be attributes or parameters of the item, such as an amount, a value, a CO2 content, any other attributes, or parameters which are suitable for characterizing the item.

When a transaction is performed, this transaction modifies the item, in particular modifies its corresponding data items in the local repository. For example, a transaction may modify the amount of the item in the local repository.

A transaction may be an internal transaction of items within one local repository. Such an internal, intra-repository or local transaction only modifies the items and corresponding data items within the corresponding local repository. Alternatively, a transaction may be a transaction between one or more local repositories. In this case, a transaction not only modifies the items and corresponding data items within one local repository, but also modifies the respective items and corresponding data items within the cooperating local repository. Such an inter-repository transaction may for example refer to an exchange of items between two repositories.

Any party, for example an entity being part of the transaction or a certifying entity, may request information with respect to a transaction (either intra- or inter-repository transaction) of the first entity, for example for gathering specific information of the transaction, like characteristics of the transferred, exchanged of changed items of the transaction. The requested information may then be received by the requesting party.

It should be noted that the requesting entity may either actively request the information from the first entity by sending a corresponding request message or may retrieve the requested information from a repository without a previous request message. Further, the first entity may actively send the requested information or may provide access to the requested information via the repository. Other embodiments of the requesting and receiving step are also possible.

As the information with respect to the transaction should not only be provided to a requesting party, but it should also be verified that the requested and provided information is true, the information comprises a final value of at least one data item of the item after the transaction and a hash value of an internal value of the corresponding transaction of the first entity. The final value shows the current characteristics of the respective item in the local repository of the first entity. The hash value of the internal value of the corresponding transaction clearly defines the transaction.

The receiving party may then verify the hash value of the internal value of the corresponding transaction of the first entity. Thus, it can be ensured that the provided information refers to the specific transaction for which the information has been requested.

In addition, the final value of the at least one data item is verified using an invariant with respect to a second value of the at least one data item of the item of the transaction. An invariant is a relation between the values of a system that must always hold. In the here described context, there may be two types of invariants: local invariants that describe relations inside a single local database and coupling invariants that relate the values of different local databases.

For instance, the total CO2-fingerprint in the repository of an entity at a certain instant of time *t*₁ is equal to the CO2-fingerprint at time *t*₀ plus the CO2-fingerprint locally produced in the transactions within this entity between *t*₀ and *t*₁ plus the CO2-fingerprint acquired in this period of time. This is a local relation between the values of the repository history of the entity between any two points of time (assuming there are no pending transitions related to unfinished transactions).

In the case of coupling invariants relating the repository values of two entities, the value of CO2-fingerprint that the first entity gains when acquiring some items from a second entity must be equal to the CO2-fingerprint that the second entity loses during the same transaction (not counting CO2-fingerprint generated by transportation or storage). More precisely, assuming the second entity *Vᵢ* delivers to *Vⱼ* a certain amount of an item with a given CO2 fingerprint. Then a coupling invariant is a relation between the local databases or repositories of the two entities: it is to be expected that *Vᵢ* subtracted a certain number in its inventory (because it delivered some item) while *Vⱼ* added the same value to its inventory.

It should be noted that the CO2 fingerprint is used in this application as an example of a data item. However, it should be noted that the data item could also be any other characteristic or attribute of an item which changes with a transaction of an entity with respect to this item.

As both values, i.e., the final value of the at least one data item and a second value of the at least one data item of the item of the transaction. are related to each other via the invariant, the final value of the data item may be verified. This provides an easy and reliable way of verifying that the final value of the at least one data item is true. In combination with the verification of the transaction, the method is able to ensure that the first entity provides information with respect to a specific transaction and corresponding item which corresponds to the reality of the repository of the first entity.

According to an embodiment, the at least one item and the corresponding data items are stored in the form of a Merkle Tree, in particular a historical extended Merkle Tree.

A Merkle tree, also called hash tree, is a data structure in the form of a tree in which every leaf node is labelled with the cryptographic hash of a data block, and every node that is not a leaf (called a branch or inner node) is labelled with the cryptographic hash of the labels of its child nodes. A hash tree allows efficient and secure verification of the contents of a large data structure.

Preferably, the specific form of a historical extended Merkle tree is used which is able to record the history of the data items that are read and written (or changed) by the transactions. Each item has its own Merkle tree being a sub-Merkle tree of the historical extended Merkle tree. The position of the leaves or roots (i.e., hash values) of items of an entity (e.g., steel aluminum, plastic, glass, etc.) in the historical extended Merkle tree does not change over time and due to transactions. When new items appear, they may be added to the historical extended Merkle tree without changing the address (i.e. position) of the previously existing items, because new items are placed as new leaves and branches for example to the right of such a historical extended Merkle tree.

For example, if an entity has to navigate to the item it is interested in (for example for verification purposes), the latest version of the history is at a very well-defined position: on the last leaf to the right of the historical extended Merkle tree. Thus, the address of the last value of an item is the concatenation of the root hash of the item's sub-Merkle tree with a sequence of ones (representing the child on the right). Alternatively, the newest values could be added on the very left. Other approaches like doubly-linked-lists are also possible.

Adding the newest values on the left may have the advantage that the notion of "very left" is independent of the number of children for the nodes of the tree and therefore is also adequate for non-binary trees. This may be the case as any entity seeking for the information of the newest value may find it quickly and will not have to search inside the tree. Further, if the child nodes are numbered "0,1,2,...", then the very left is always "0". Thus, a searching mechanism for finding the very left data will only have to follow the "0-th" child of each node until the end. In contrast to that, on the right side, this index would change, depending on the number of child nodes. However, it should be noted that using the right node for the newest value is also possible since it is known how many child nodes a node has).

According to a further embodiment, the requested information comprises at least one of a proof of inclusion of the item, data item and/or transaction (i.e., that the data, data item and/or transaction is actually part of the repository), proof of consistency of the item, data item and/or transaction (i.e., that the provided information is consistent with previous versions of the information or newer versions of the information), and proof of possession of the item, data item and/or transaction (i.e., that the entity providing the information is in possession of the information). Providing any kind of proof may make the verification more reliable as the provided data is more reliable to be true.

Using a historical extended Merkle tree may provide the ability to provide proofs of inclusion, consistency, and possession due to the structure and characteristics of such a Merkle tree. Proof of inclusion may proof that a certain (data) item or a certain hash is included as part of the Merkle Tree. The Merkle tree as used herein may implement a mechanism to prove to a requesting entity that the provided information is actually part of the Merkle tree.

Proof of inclusion may demonstrate that a leaf node is a part of a given tree which is a known technique for Merkle trees. The existence of proofs of inclusion for Merkle trees may also be expressed by saying: a Merkle tree is a cryptographic commitment scheme, where the root of the tree is seen as a commitment.

Proof of consistency may proof that an older version of the Merkle Tree is consistent with a new version of it, and therefore that the updated Merkle tree contains the older version of it. For example, proof of consistency is implemented as the described Merkle tree only adds newer data, without deleting the older data (kind of append-only log).

Proof of possession may for example be realized using a certificate or other verification procedure that shows to the requesting entity that the first entity providing the information is the owner of the provided information, i.e., owner of the repository with its stored data.

According to a further embodiment, the step of receiving the requested information includes retrieving the requested information from the local repository. Another entity, for example an auditing entity or certifying entity may either request the information from the first entity and the first entity may send the requested information to the requesting entity or, alternatively, the requesting entity may directly retrieve the information from the repository of the first entity. For this purpose, some of the information of the repository of the first entity may be publicly available. Retrieving the requested information directly from the local repository may have the advantage that no communication between the first entity and the requesting entity is necessary.

According to a further embodiment, the step of verifying the final value of the at least one data item includes verifying a local relation between the final value of the at least one data item and the original value of the at least one data item of the item prior to the transaction. In this case, the first entity may verify that the final value of the data item is true compared to the previous value of the data item. The transaction in this case is thus an internal transaction of the first entity, so called intra-repository transaction. Such a transaction may manufacture (or change/modify, improve, correct, etc.) an item of an entity, using (consuming) existing items of the same entity. For instance, to produce a certain amount of cars of a certain model, the entity may use a given amount of steel in a certain quality, a number of windshields of a certain quality, a certain number of seats in a certain quality, etc. Items may need to be stored in warehouses as part of the manufacturing process (e.g., to dry, cool down, etc.), thus any additional CO2 caused by storage is accounted for in this transaction when the data item is the CO2 fingerprint.

Alternatively, the transaction may be a transaction between the first and a second entity. In this embodiment, the second entity comprises a local repository in which at least one item with corresponding data items is stored, wherein the transaction to be verified modifies the at least one item and its corresponding data items in the local repositories of the first and the second entity. Thus, the transaction between the first and the second entity alternates the same data item of the item in the repositories of the first as well as the second entity.

Transaction between entities may be for example acquiring (buying, receiving) or delivering items from one entity to another entity. Acquire and deliver are two transactions which are coupled but different transactions, each one running on only one entity. Such an acquisition transaction may acquire (buy, receive) items from another entity. This transaction may be written as: acquire(subject: *Vᵢ*, from: *Vⱼ*, item: item-type, amount: number-of-items, quality: quality-value), which declares that the first entity *Vᵢ* acquires from the second entity *Vⱼ* the given amount of the specified item with the given quality. This transaction increments the value of the data item "amount of items" in the repository corresponding to the item with this quality. This transaction is coupled with a corresponding deliver transaction of the second entity.

Similar, a transaction may deliver a certain number of items in a given quality to another entity. This transaction has almost the same format than the acquire transaction and is coupled with a corresponding acquire transaction with the from and to roles reversed (the one who acquires in one transaction must match the one who delivers in the other and vice-versa; the other attributes or data items of the transaction must match identically, e.g., amount and CO2-fingerprint.)

According to a further embodiment, the step of receiving the requested information includes receiving the requested information by the second entity. In this case, the first entity sends the requested information to the second entity which can then verify the transaction and its corresponding information. For example, the second entity may need information of a CO2 fingerprint of a transaction (e.g., the first entity has delivered some items to the second entity) and may thus ask for the corresponding information from the first entity. As the second entity is participant of the transaction, the first entity may send the information to the second entity.

According to a further embodiment, verifying the hash value of the internal value of the corresponding transaction of the first entity includes comparing the hash value of the internal value of the corresponding transaction of the first entity with the hash value of the internal value of the corresponding transaction of the second entity. Both entities have a hash value of the transaction. In order to be able to verify the transaction and thus the corresponding information, the second entity may compare the hash value of the first entity with its own hash value to ensure that the information the first entity is providing correspond to the transaction for which the second entity has requested information. It is also possible that the internal hash value of the transaction of the first entity and/or the internal hash value of the transaction of the second entity is compared with a global hash value of this transaction to verify the transaction.

According to a further embodiment, verifying the final value of the at least one data item includes verifying the final value of the at least one data item of the first entity and the original value of the at least one data item of the corresponding item of the second entity using coupling invariants.

As already described above, the data item of two entities may be related to each other by coupling invariants. For example, the value of the CO2-fingerprint that the first entity gains when acquiring some items from the second entity must be equal to the CO2-fingerprint that the second entity loses during the same transaction (not counting CO2-fingerprint generated by transportation or storage which is described above with respect to the intra-repository transaction). More precisely, assuming the first entity *Vᵢ* delivers to the second entity *Vⱼ* a certain amount of an item with a given CO2 fingerprint. Then a coupling invariant is a relation between the local repositories or databases of the two entities: it is to be expected that *Vᵢ* subtracted a certain number in its repository (because it delivered some item) while *Vⱼ* added the same value to its repository. The herein described method allows the entities to prove to each other that indeed those two values are equal: the value subtracted in the local repository of *Vᵢ* is the same as the value that *Vⱼ* added in its inventory.

According to a further aspect, a first entity is provided which comprises a local repository in which at least one item with corresponding data items is stored. The first entity is configured to perform a transaction which modifies the at least one item and its corresponding data items in the local repository. The first entity further comprises a receiving unit for receiving a signal requesting information with respect to the transaction, and a sending unit for sending the requested information comprising a final data item of the item after the transaction and a hash value of an internal value of the corresponding transaction.

According to an embodiment, the first entity is configured to publish invariants of data items of the at least one item. Thus, any entity requesting information regarding a specific transaction may retrieve the information as published data. This provides the advantage the first entity may decide which information will be published and is not required to communicate with any other entity for exchanging the corresponding information.

According to a further aspect, a second entity is provided which comprises a sending unit for sending the signal requesting information with respect to transaction of the first entity as described above, a receiving unit for receiving the requested information comprising a final data item of the item after the transaction and a hash value of an internal value of the corresponding transaction of the first entity, and a verification unit for verifying the hash value of the internal value of the corresponding transaction of the first entity and verifying the final value of the at least one data item using an invariant with respect to a second value of the at least one data item of the item of the transaction.

It should be noted that the first entity and the second entity may also have the same units, i.e., the first entity may also have a verification unit. Further, the sending and receiving units of the first and the second entity may provide the same functionality. Thus, the first entity or the second entity may be configured to request the information and the respective other entity may be configured to send the requested information.

According to an embodiment, the second entity is a higher-level entity for supervising the first entity, for example a certifying entity or the like. In this case, the second entity may particularly verify any transactions taking place in the first entity, thus intra-repository transactions. Alternatively, the second entity may be an entity participating in the transaction of the first entity and comprising a local repository in which at least one item with corresponding data items is stored. In this second case, the transaction modifies the at least one item and its corresponding data items in the local repositories of the first and the second entity as described above.

According to a further aspect, a system is provided which comprises the first entity as described above and at least one second entity as described above. The second entity may either participate in a transaction with the first entity or may be a higher-level entity. The system may also comprise both kinds of second entity and/or may comprise a plurality of first and/or second entities.

Thus in one embodiment, the system may comprise a first entity and one second entity performing a transaction to be verified and a further second entity requesting a verification of this transaction.

According to an embodiment, the first entity and/or the second entity are configured to access the local repositories using a certified routine.

A certified routine may be a standard program that has specific limitations to what it can and cannot do to data objects in the local repositories. This may ensure that the entities cannot arbitrarily manipulate their stored data objects and thus may improve the reliability and security of the verification procedure. Such a certified routine may have been scrutinized by a trusted party and found to be correct. For example, trusted execution environments may offer this functionality, but there are also several solutions relying on more standard procedures, such as the Clark-Wilson Model.

The embodiments and features described with reference to the method of the present invention apply mutatis mutandis to the first entity, the second entity and the system of the present invention.

The respective entity, e.g., the first entity, the second entity, or their respective units (e.g., receiving unit), may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

The method as described above can be realized as a computer-implemented method.

According to a further aspect, the invention relates to a computer program product comprising a program code for executing the above-described method for verifying a transaction of a first entity when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a system for verifying a transaction of a first entity;
- Fig. 2: shows a sequence of steps of a method for verifying a transaction of the first entity in the system of Fig. 1;
- Fig. 3: shows an example of a historical extended Merkle tree as used on the method of Fig. 2;
- Fig.4: shows an example of transactions between different entities of the system of Fig. 1; and
- Fig. 5: shows an example of a transaction between the first and the second entity of Fig. 1 together with the corresponding historical extended Merkle trees.

In the Figures, like reference numerals designate like or functionally equivalent elements, unless otherwise indicated.

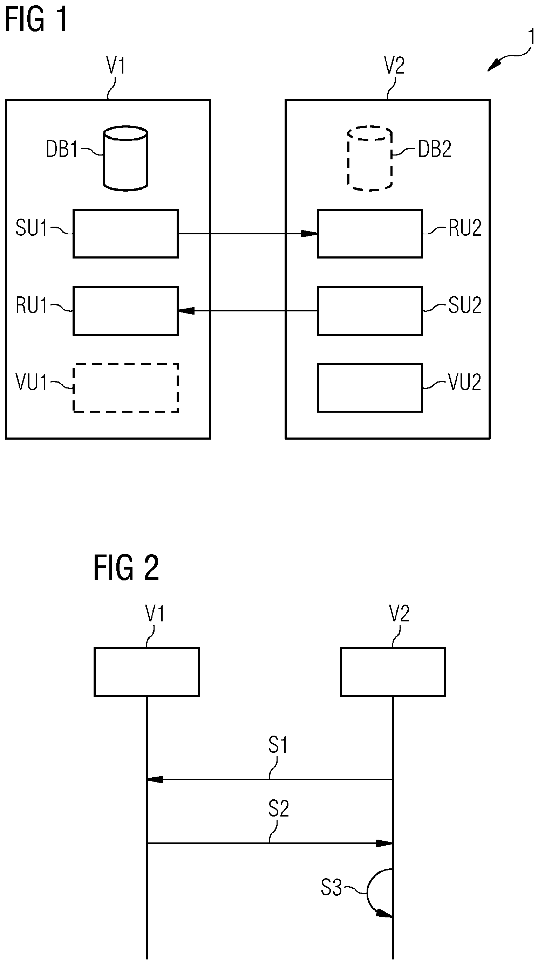

Fig. 1 shows a system 1 for verifying a transaction of a first entity V1. A transaction may occur inside of the first entity V1 or may occur between the first entity V1 and a second entity V2.

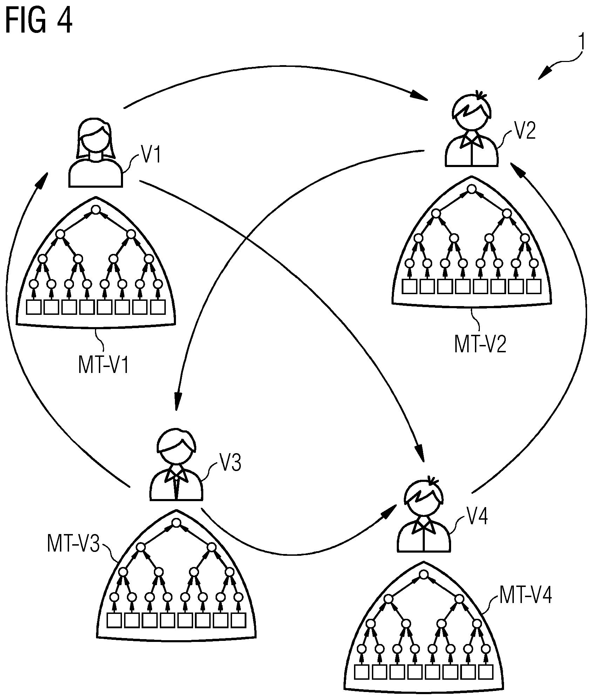

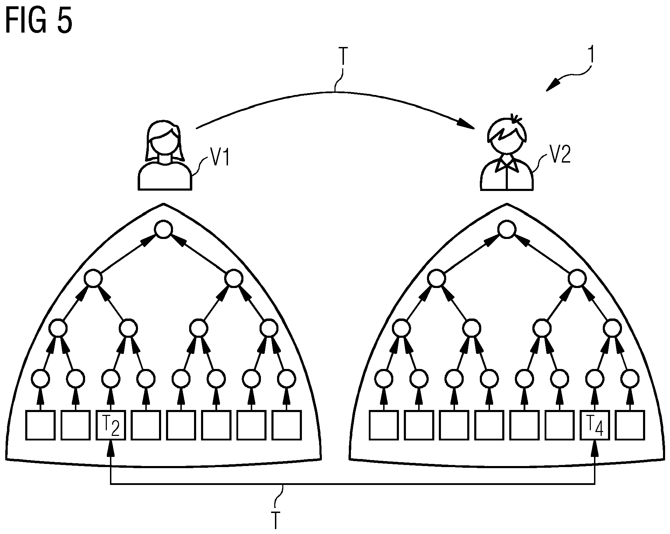

A transaction may comprise for example manufacturing, transporting, delivering, and/or acquiring an item. A detailed description of the transaction is given below with reference to Figs. 4 and 5. Each entity V1, V2 may comprise a databank or repository DB1, DB2 in which the items of the respective entity V1, V2 are stored. The second entity V2 may either be an entity participating in the transaction or may be a higher-level entity as a certifying entity or the like. In the latter case, the repository DB2 is optional.

When a transaction takes place, this transaction alters or modifies the corresponding repository DB1, DB2. That means in case of a transaction of an item within the entity V1, the repository DB1 changes the corresponding item. In the case of a transaction between V1 and V2, the repositories DB1 and DB2 changes the corresponding item as a transaction between two entities modifies the item of the transaction in both entities V1, V2 and the corresponding repositories DB1, DB2, respectively.

In the repositories DB1, DB2, the items (for example products or goods of the corresponding entity V1, V2) are stored together with corresponding data items (for example characteristics or attributes of the item such as amount, CO2 fingerprint etc.). When a transaction occurs, this transaction will typically change at least one data item of the respective item, for example the amount and/or the CO2 fingerprint.

After such a transaction, the second entity V2 may need information from the first entity V1 regarding the transaction. The corresponding method is shown in Fig. 2.

A sending unit SU2 of the second entity V2 sends a request requesting information with respect to the transaction from the first entity V1 (step S1 in Fig. 2) which is received by a receiving unit RU1 of the first entity V1.

Then, a sending unit SU1 of the first entity V1 sends the requested information to a receiving unit RU2 of the second entity V2 (step S2 in Fig. 2). The requested information comprises a final value of at least one data item of an item of the transaction, i.e., the value of the at least one data item after the transaction took place. Further, the requested information comprises a hash value of an internal value of the corresponding transaction of the first entity V1.

Afterwards, the second entity V2 verifies the requested information using a verification unit VU2 (step S3 in Fig. 2). As can be seen, the first entity V1 may also comprise a verification unit VU1 to be able to verify a transaction.

During the verification, the verification unit VU2 verifies that the hash value of the transaction of the first entity V1 corresponds to the transaction. This may be done for example by comparing the received hash value with a hash value of the corresponding transaction of the second entity V2 (in case the second entity V2 participates in the transaction). Alternatively, the received hash value may be compared with a global hash value of the transaction. Thus, the second entity V2 may ensure that the received information belongs to the transaction to be verified.

In addition, the verification unit VU2 verifies the final value of the at least one data item. For this purpose, invariants may be used which couple two data items and the corresponding values with each other. When the value of the data item changes in one repository, the value of the data item also changes in the cooperating repository (coupling invariants). When the transaction takes place within the first entity V1, the value of the data item changes from an original value to the final value. In this case, the values are also coupled via an invariant defining the relation between the values. Using invariants for verifying the final value of the data item provides a reliable and easy way of ensuring that the received value is true.

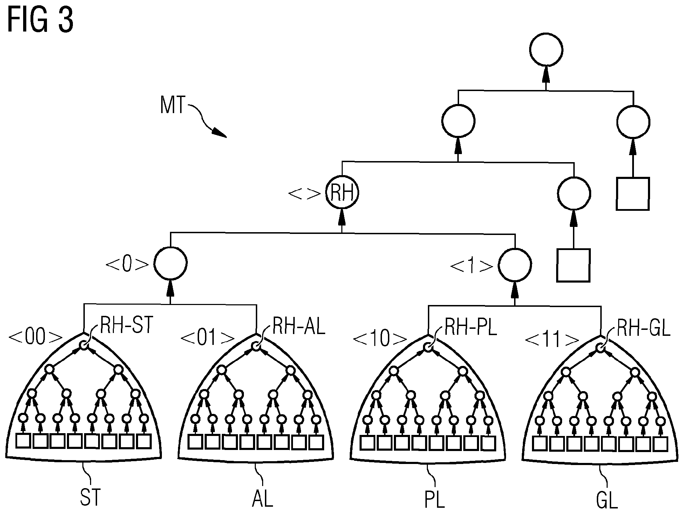

The repositories DB1, DB2 of the system 1 are organized using historical extended Merkle trees MT as shown in Fig. 3. In a historical extended Merkle tree, the data items of an item are stored as hash values in a tree form. The historical extended Merkle tree MT is used to record the history of the data items that are read and written by the transactions that should keep a coupling invariant. In order for one entity to query the information for coupling invariants, each entity has an historical extended Merkle tree MT (see Figs. 4 and 5).

The structure of the historical extended Merkle tree MT is shown in Fig. 3. The circles indicate the hash values of the respective branches, and the squares indicate data nodes. Each data node may result in a sub-Merkle tree.

Starting from the bottom of the Merkle tree MT, a sub-Merkle tree ST, AL, PL, GL is provided for each item (for example steel ST, aluminum AL, plastics PL, glass GL). The sub-Merkle trees result in corresponding root hashes RH-ST, RH-AL, RH-PL, RH-GL which can be used as a hash value of the corresponding item in its totality. The root hashes RH-ST, RH-AL, RH-PL, RH-GL result then in an overall root hash RH.

Such a Merkle tree structure has a great advantage: each item has its own Merkle tree ST, AL, PL, GL, a sub-Merkle tree of the historical extended Merkle tree MT. The position of the single root-hashes of those items (RH-ST, RH-AL, RH-PL, RH-GL) does not change. When new items appear, the address/position of the previously existing items does not change, because new items are placed to the right. If a user, for example the first entity V1 in its own Merkle tree MT, has navigated to the item he is interested in (for presentation of a proof or in particular for verification purposes), the latest version of the history is at a very well-defined position: on the last leaf to the right. Thus, the address of the last value of an item is the concatenation of the root hash of the item sub-MT with a sequence of ones (representing the "right" child).

As shown in Fig. 4, the system 1 may comprise a plurality of entities, V1-V4. Each of the entities V1-V4 may have the same arrangement as shown and explained in Fig. 1.

As indicated by the arrows, transactions may occur between the entities V1-V4 or may occur within one entity V1. Each entity V1-V3 that participates in a transaction can only write or modify local variables, shared variables, or global variables of the corresponding transaction. The variables may be data items of the items of the transaction as explained above.

The modification of variables is recorded in an append-only log (or a cyclic log where old entries are deleted) using the Merkle Tree MT. As explained above, it is possible to have one Merkle tree for each item, in particular for each item in each quality. Alternatively, it is also possible to have a Merkle tree MT for all items in the repository.

One possible approach is to record for every item (material or part) a pair: (tabl, tran), where tabl is the latest repository table with the amounts for each quality, the CO2-fingerprint, the location where this item is, etc. as in the following example for steel:

**Table 1**

| item | FP (tons CO2 per ton) | Amount (tons) | location | ... |
|---|---|---|---|---|
| steel | 0.15 | 2.0 | Shanghai | ... |
| steel | 0.20 | 6.2 | Erlangen | ... |
| steel | 0.28 | 1.4 | ... | ... |
| steel | 0.30 | 10.6 | ... | ... |

The second record in the pair, tran, describes (or is a pointer to) the last transaction that modified this data item.

Possible procedures of storing items and data items and how to use the databases DB1, DB2 are explained in the following:
1. Each entity V1, V2 keeps its current inventories of items and the history of transactions and past inventories in the respective local database DB1, DB2, implemented as an Extended Merkle Tree MT. This will allow the entities to provide proofs (proofs of inclusion and proofs of consistency augmented with proofs of context).
2. Although the local repository DB1, DB2 of V1, V2 is indeed local to that entity, interested and authorized parties may ask about particular details of the inventory. Historical extended Merkle trees MT allow the owner of the local database DB1, DB2 to answer those queries and provide proofs that the answers are correct. This is used in two cases:
   - If the entities V1, V2 make a transaction T (say, one provides some goods to the second one, or transports some goods for the other one, etc.), then it is expected that the entities agree on the parameter of their transaction (it should be impossible that one entity accounts for a transaction of 40 tons and the other one for 50 tons). The herein described method ensures that each entity V1, V2 is able to query the local database DB1, DB2 of the other entity in a verifiable way. The main purpose of that verification is that before the transaction is deemed as fully finalized, each entity may have verified that both entities V1, V2 agree on the parameter of their transaction T.
   - Authorizing, certifying or trusted third entities may query the local databases DB1, DB2 or the entities V1, V2 to verify that they are acting correctly. The queries from those third entities can be made without disclosing which trusted third entity is asking the query. This may be done to avoid corruption, collusion, or other compliance problems.
   - In any case, the owner of the local database DB1, DB2 may be able to hide information from its local database DB1, DB2 to those third entities, which nevertheless are authorized to read other parts of the same local database DB1, DB2.
3. The entities V1, V2 may publish demonstrations that the changes in their data bases DB1, DB2 were done only via certified routines in the transactions.
4. The entities V1, V2 may publish relevant verifiable local invariants that imply that the respective entity is acting correctly, according to the specified rules and according to the certifications obtained by a certification authority. Those local invariants relate the values of the local repository DB1 of entity V1; they can express relations between current values alone, or between current and history values. The existence of the invariants may also depend on the careful replication of data (data redundancy): not only the data is replicated, but also it is replicated in the same form or format, so that automatic routines are able to verify that the values match.
   - To prove and publish local invariants, an entity V1, V2 may run certified integrity verification routines and securely publish in shared databases the results of those results for an internal audit.
   - In particular, the entities V1, V2 may be able to prove that every local (manufacture, transport) change in the repository DB1, DB2 is consistent with the certifications of certification authorities. For example: if an entity transports 100 tons of material in a ship between Singapore and Hamburg, the value of the CO2-fingerprint is the one calculated from the certifications, the type of transport, kilometers, etc. of the transaction.
5. But not only can the entities prove invariants about local transactions, they also are able to publish information about the local views of shared transactions, for instance that the inventories change accordingly to the CO2-fingerprint they record for their shared transactions in their local databases. Moreover, they can publish a proof that the CO2-fingerprint they record for a shared transaction with another entity corresponds to the value that this other entity records on its own inventory.
6. The matching values produced by two entities together may be published in a shared database with the relevant transaction-invariants.

Some further features pf the method of Fig. 2 will be explained in the following with reference to Fig. 5 where a transaction T takes place between the entities V1, V2.

As already explained above, (coupling) invariants are used as relations between local sequences of values of the corresponding data items modified by the transaction T in the respective repositories DB1, DB2 of the two entities V1, V2 (indicated in Fig. 5 by the transaction T2 in the Merkle tree MT-V1 of entity V1 and the transaction T4 in the Merkle tree MT-V2 of entity V2).

The transaction T is performed by the entities V1 and V2 with specific parameters param. For example: V1 sells n items a to V2 for val Euros. (Thus, the entity V2 buys n units of the item a from V1 for val Euros.) Those actions are recorded in the respective databases DB1, DB2: The local repository DB1 of V1 records the transaction as "sell(V2, T, a, n, val)" while the local repository DB2 of V2 records the transaction as "buy(V1, T, a, n, val)". The transaction "sell" reduces x1 the amount of items a in the repository DB1 of V1, while "buy" increments the amount x2 of items a in the repository DB2 of V2.

This may be written as:
x1, /sell(V2, T, a1, n1, *), x1' in the local database of V1
x2, /buy(V1, T, a2, n2, *), x2' in the local database of V2
where
x1 was the amount of items a in the inventory of V1 before the transaction;
x1' is the amount of items a in the inventory of V1 after the transaction;
x2 was the amount of items a in the inventory of V2 before the transaction;
x2' is the amount of items a in the inventory of V1 after the transaction;
the asterisk "*" may refer to any other variable which is of no importance.

The coupling invariant used for the above-described verification of the transaction is the conjunction of:
*a*₁ = *a*₂: the item that V1 sells is the same item as V2 buys.
*n*₁ = *n*₂*:* the amount that V1 sells is the same amount as V2 buys.
*x*₁ - *x*₁*' =* -(*x*₂ - *x*₂') = *n*₁: the amount in the first inventory decreases by the same amount as the amount in the second inventory increases.

Thus, if V1 performs the transaction T "Deliver(x=50)" with V2 (thus V1 gives 50 units to V2), and assuming that this transaction has a global transaction ID T and was recorded by V1 as T2 and by V2 as T4 (see Fig. 5), the needed coupling invariant is: a(1)' = a(1) - *x, a*(2)' = a(2) + *x,* with *x =* 50. Each entity must convince the other that it processed the transaction T correctly. Each entity can query the other entity about the information regarding the transaction T and may locally verify the coupling invariants using this information, as already explained above with reference to Figs. 1 and 2.

Some of the functionality of the described system and method is similar to a smart contract on a permissioned blockchain and may have similar advantages. In particular, the system and method:
- implements immutable/tamper-evident transaction repositories, where each repository distributes the data. The repository is partitioned in almost disjoint parts: each entity contains in its local repository the information that is relevant for itself. Each part of the repository is not a (block-)chain but rather a historical extended Merkle tree as explained above.
- the system is accessible only to a set of authorized entities, for example the entities participating in a supply chain of the system, a group of certification entities, a group of trusted third entities etc. The entities can run a limited set of well-defined transactions. The entities may have have agreed on a set of rules that specify under which situations a transaction would be valid and when not.
   - for instance, the rule "no double spending" in the case of coins in a Blockchain. In this case, a "no double spending" rule could mean for instance: a CO2-fingerprint certificate that was issued for a certain quantity of items cannot be used for more items than what was intended.
   - at a certain moment, some types of "race conditions" can happen: each of two transactions would be valid, but if one happens the other one would not be valid anymore. For example, in a Blockchain you can deliver an individual, indivisible item to entity X or Y, but not to both.
- the system and method have controlled transparency, that means, the entities have agreed on a set of rules that specify under which situations a transaction remains confidential, who is authorized to validate which aspects of the transaction (who has a "valid authorized legitimate interest" in verifying a transaction or an invariant), and to whom a transaction cannot be repudiated. Thus, a transaction can be (depending on the situation):
- a validated transaction: transactions can be verified by all entities that have a legitimate interest in doing so.
- a non-repudiable transaction: entities cannot deny to an authorized trusted third entity (e.g., an auditor) having performed the transaction.
- confidential records and transactions: some aspects of a transaction and some information may remain confidential to one entity or to a small set of entities.

The herein described method and system provide inter alia the following advantages:
- Local append-only logs for local databases. More specifically, Merkle trees are used by the entities of the system to keep their repositories. Merkle trees provide methods that allow the owner of a local database to hide information from its local database to parties, which nevertheless are authorized to read other parts of the same local database.
- A particular structure of the local database (historical extended Merkle trees, as explained above) is used that provide a method to query the database of an entity so that the answer contains a proof (e.g., an inclusion proof) that may be verified by the querying entity. More specifically, the structure of the historical extended Merkle tree provide methods that allow the entities to query another entity about particular details of the repository or database. When an entity provides information to other entities, the historical extended Merkle tree provides a mechanism to show that the data presented in the proof is authentic. Thus, the case where an entity provides proofs-of-inclusion using fake data can be avoided.
- It is possible to make queries and demonstrate authorization without disclosing who is asking the query.
- The system and method are more efficient than the previously used Blockchain technology. Blockchain technologies, although nowadays pervasive, can lead to a substantial increase in latency, as time is required for the nodes in the Blockchain to reach consensus. Since the here described system and method does not require consensus, it lowers the overall system latency. While this lower latency is achieved, it also achieves the fact that local and global views on the system state are kept consistent. Thus, a verification during runtime may be provided.
- The system and method provide a lower complexity as they do not rely on complex cryptographic operations and, therefore, achieve an overall lower complexity compared to standard and existing methods; this also leads to two additional advantages of the proposed methodology: simpler and more robust implementation, and energy saving.
- The system and method provide a simple and robust implementation: It is widely known that implementation of cryptographical algorithms is complex and is difficult to achieve with a high degree of correctness. Since the herein described methodology does not rely on complex cryptographical operations, the implementation is made easier. An easier implementation leads to less vulnerabilities and increased robustness of the methodology.
- Energy may be saved: Since the method and system does not require consensus, the energy spent to reach the consensus is thus saved. As such, the implementation also has a lower carbon footprint compared to an implementation based on blockchain technologies.
- The system and method facilitate a loose coupling: Since the usage of a blockchain technology is not required, the herein used implementation also allows for the usage in scenarios where the participating entities are loosely coupled. This means that the applicability of the system and method is more generic and universal than previous methodologies.
- It provides a lower barrier to adoption: Due to the loose coupling advantage, the system and method can lead to a higher acceptance by the different participating entities; as such, it is easier to establish a system based on the described system and method than those based on other technologies.

Although the present invention has been described in accordance with preferred embodiments, it is obvious for the person skilled in the art that modifications are possible in all embodiments.

### List of Reference

- 1: system
- AL: sub-Merkle tree
- DB1, DB2: repository/database/inventory
- GL: sub-Merkle tree
- MT, MT-V1, MT-V2, MT-V3, MT-V4: Merkle tree
- PL: sub-Merkle tree
- RH, RH-ST, RH-AL, RH-PL, RH-GL: root hash
- RU1, RU2: receiving unit
- S1-S3: method steps
- ST: sub-Merkle tree
- SU1, SU2: sending unit
- T, T2, T4: transaction
- V1-V4: entity
- VU1, VU2: verification unit

## Claims

1. A method for verifying a transaction (T, T2) of a first entity (V1), wherein the first entity (V1) comprises a local repository (DB1) in which at least one item with corresponding data items is stored, wherein the transaction (T, T2) to be verified modifies the at least one item and its corresponding data items in the local repository (DB1), the method comprising:
- requesting (S1) information with respect to the transaction (T, T2) from the first entity (V1),
- receiving (S2) the requested information comprising a final value of at least one data item of the at least one item after the transaction (T, T2) and a hash value of an internal value of the corresponding transaction (T, T2) of the first entity (V1), and
- verifying (S3) the hash value of the internal value of the corresponding transaction (T, T2) of the first entity (V1) and verifying the final value of the at least one data item using an invariant with respect to a second value of the at least one data item of the item of the transaction (T, T2).

2. The method according to claim 1, **characterized in that** the at least one item and the corresponding data items are stored in the form of a Merkle Tree (MT, MT-V1), in particular a historical extended Merkle Tree.

3. The method according to claim 1 or 2, **characterized in that** the requested information comprises at least one of a proof of inclusion of the item, data item and/or transaction (T, T2), proof of consistency of the item, data item and/or transaction (T, T2), and proof of possession of the item, data item and/or transaction (T, T2).

4. The method according to any one of the preceding claims, **characterized in that** the step of receiving (S2) the requested information includes retrieving the requested information from the local repository.

5. The method according to any one of the preceding claims, wherein the step of verifying (S3) the final value of the at least one data item includes verifying a local relation between the final value of the at least one data item and the original value of the at least one data item of the item prior to the transaction (T, T2).

6. The method according to any one of the preceding claims, **characterized in that** the transaction (T, T2) is a transaction (T, T2, T4) between the first and a second entity (V2), wherein the second entity (V2) comprises a local repository (DB2) in which at least one item with corresponding data items is stored, wherein the transaction (T, T2, T4) to be verified modifies the at least one item and its corresponding data items in the local repositories (DB1, DB2) of the first and the second entity (V1, V2).

7. The method according to claim 6, **characterized in that** the step of receiving (S2) the requested information includes receiving the requested information by the second entity (V2).

8. The method according claim 6 or 7, **characterized in that** verifying (S3) the hash value of the internal value of the corresponding transaction (T2) of the first entity (V1) includes comparing the hash value of the internal value of the corresponding transaction (T2) of the first entity (V1) with the hash value of the internal value of the corresponding transaction (T4) of the second entity (V2).

9. The method according to any one of claims 6 to 8, **characterized in that** verifying (S3) the final value of the at least one data item includes verifying the final value of the at least one data item of the first entity (V1) and the original value of the at least one data item of the corresponding item of the second entity (V2) using coupling invariants.

10. A first entity (V1) comprising a local repository (DB1) in which at least one item with corresponding data items is stored, wherein the first entity (V1) is configured to perform a transaction (T, T2) which modifies the at least one item and its corresponding data items in the local repository (DB1), the first entity (V1) further comprising
- a receiving unit (RU1) for receiving a signal requesting information with respect to the transaction (T, T2), and
- a sending unit (SU1) for sending the requested information comprising a final data item of the item after the transaction (T, T2) and a hash value of an internal value of the corresponding transaction (T, T2).

11. The first entity according to claim 10, **characterized in that** the first entity (V1) is configured to publish invariants of data items of the at least one item.

12. A second entity (V2) comprising
- a sending unit (SU2) for sending the signal requesting information with respect to the transaction (T, T2) of the first entity (V1) according to claim 10 or 11,
- a receiving unit (RU2) for receiving the requested information comprising a final data item of the item after the transaction (T, T2) and a hash value of an internal value of the corresponding transaction (T, T2) of the first entity (V1), and
- a verification unit (VU2) for verifying the hash value of the internal value of the corresponding transaction (T, T2) of the first entity (V1) and verifying the final value of the at least one data item using an invariant with respect to a second value of the at least one data item of the item of the transaction (T, T2).

13. The second entity according to claim 12, **characterized in that** the second entity (V2) is a higher-level entity for supervising the first entity (V1) or that the second entity (V2) is an entity participating in the transaction (T, T2) of the first entity (V1) and comprising a local repository (DB2) in which at least one item with corresponding data items is stored, wherein the transaction (T, T2, T4) modifies the at least one item and its corresponding data items in the local repository (DB2) of the second entity (V2).

14. A system (1) comprising the first entity (V1) according to claim 10 or 11 and at least one second entity (V2) according to claim 12 or 13.

15. The system according to claim 14, **characterized in that** the first entity (V1) and/or the second entity (V2) are configured to access the local repositories (DB1, DB2) using a certified routine.

16. A computer program product comprising a program code for executing the method, according to at least one claim of claims 1 to 9, for verifying a transaction of a first entity when run on at least one computer.
